Europäisches Patentamt

European Patent Office

Office européen des brevets

(19)

(11) **EP 1 078 475 B1**

(12) **EUROPÄISCHE PATENTSCHRIFT**

(45) Veröffentlichungstag und Bekanntmachung des Hinweises auf die Patenterteilung:
**19.12.2001 Patentblatt 2001/51**

(21) Anmeldenummer: **99934479.9**

(22) Anmeldetag: **11.05.1999**

(51) Int Cl.⁷: **H04B 7/005**

(86) Internationale Anmeldenummer:
**PCT/DE99/01427**

(87) Internationale Veröffentlichungsnummer:
**WO 99/59262 (18.11.1999 Gazette 1999/46)**

(54) **VERFAHREN ZUM INSBESONDERE INDOOR-BETREIBEN EINER DRAHTLOSEN TELEKOMMUNIKATIONSEINRICHTUNG**

METHOD FOR OPERATING A WIRELESS TELECOMMUNICATION DEVICE ESPECIALLY INDOORS

PROCEDE PERMETTANT EN PARTICULIER DE FAIRE FONCTIONNER A L'INTERIEUR D'UN BATIMENT UN DISPOSITIF DE TELECOMMUNICATION SANS FIL

(84) Benannte Vertragsstaaten:
**DE FR GB**

(30) Priorität: **13.05.1998 DE 19821519**

(43) Veröffentlichungstag der Anmeldung:
**28.02.2001 Patentblatt 2001/09**

(73) Patentinhaber: **SIEMENS AKTIENGESELLSCHAFT 80333 München (DE)**

(72) Erfinder:
• **PILLEKAMP, Klaus-Dieter D-40699 Erkrath (DE)**
• **REINHARDT, Markus D-89275 Oberelchingen (DE)**

(56) Entgegenhaltungen:
**EP-A- 0 682 417          EP-A- 0 682 418**
**WO-A-97/26716          JP-A- 9 036 801**
**US-A- 5 535 238**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum insbesondere Indoor-Betreiben einer drahtlosen Telekommunikationseinrichtung, welche mindestens eine Basisstation und mindestens ein Mobilteil umfaßt, wobei im Empfänger des Mobilteils die momentane Empfangsleistung gemessen und der Empfangsleistungswert der Basisstation zur Regelung der Sendeleistung übermittelt wird.

Drahtlose Telekommunikationseinrichtungen, d.h. mobile Funk-Sende-/Empfangseinrichtungen, die als Endgeräte eingesetzt werden, sind hinreichend bekannt. Beispielsweise seien hier Schnurlos-, Mobil-, Satellitenfunk-, Bündelfunktelefone und ähnliche genannt.

In Europa erfolgte über das European Telecommunication Standard Institute die Festlegung auf den DECT-Standard (Digital European Cordless Telecommunication Standard). DECT-Systeme basieren auf dem drahtlosen Informationsaustausch zwischen Basis- und Mobilstationen oder Mobilteilen, wobei die Reichweite innerhalb einer Funkzelle bis zu einigen hundert Metern beträgt. Die DECT-Frequenzbereiche liegen zwischen 1880 und 1900 MHz. Der DECT-Standard kann sowohl bei Einzelzellenanordnungen, z.B. drahtlosen Heimtelefonen im Indoor-Bereich, als auch in Mehrfach-Funkzellenanordnungen, z.B. einem Corporate Network, Verwendung finden.

Die standardisierten Funkprotokolle sind so gestaltet, daß auch ein Betreiben mehrerer Basis- und Mobilstationen in derselben physikalischen Umgebung möglich ist, indem eine Einteilung des Frequenzspektrums in eine vorgegebene Anzahl von physikalischen Kanälen vorgenommen wird. Beispielsweise sieht der DECT-Standard eine feste Zuordnung zwischen physikalischen DECT-Kanälen und logischen Kanalnummern vor. Die im Standard festgehaltenen Protokolle zum Informations- und Nachrichtenaustausch ermöglichen das Ausführen von Übertragungs- und Kommunikationsprozeduren auch dann, wenn verschiedene Teilnehmer in einem lokalen Netz eines DECT-Systems aktiv sind.

Die Nachrichtenübertragung ist auf der Basis verschiedener Übertragungsverfahren, z.B. FDMA (Frequency Division Multiple Access), TDMA (Time Division Multiple Access) und/oder CDMA (Code Division Multiple Access) innerhalb der erwähnten Funkstandards DECT, GSM oder anderer möglich.

Der Leistungs- bzw. Energieverbrauch der drahtlosen Telekommunikationseinrichtung wird durch die Kommunikationsart bestimmt, die durch unterschiedliche Reichweiten bei der Übertragung von Funknachrichten spezifiziert ist.

Aufgrund geringer Übertragungsreichweite und der relativ geringen Sendeleistung bei schnurlosen Telefonen nach dem DECT-Standard ist der Energieverbrauch geringer als bei vergleichsweise betriebenen zellularen Mobilfunktelefonen nach dem GSM-Standard, wobei letztere Sendeleistungen bis zu 2000 mW besitzen.

Aus der EP 0 330 166 B1 ist es bekannt, Leistungsüberschüsse bei Funksystemen durch eine Sendeleistungsregelung in Abhängigkeit von der Übertragungsqualität sowie der Empfangsfeldstärke zu vermeiden.

Wie dort beschrieben, wird als Regelkriterium für die Regelung der Sendeleistung eines mobilen Handapparats eines Mobilfunksystems eine Kombination aus einer Empfangspegel- und einer Qualitätsbewertung in einer Basisstation des Mobilfunksystems über den aus dem in der Basisstation ankommenden Signal ermittelten Phasenjitter benutzt.

Bei der mobilen Funksende-/Funkempfangseinrichtung, insbesondere dem Mobilteil eines Schnurlos-Telekommunikationssystems nach der DE 44 26 255 A1 soll unabhängig von einer Empfangspegelbewertung mittels Basisstation das Mobilteil selbständig in der Lage sein, die Sendeleistung zu regeln, um den Leistungs- bzw. Energieverbrauch zu reduzieren, so daß eine maximal mögliche Betriebsdauer im Standby- oder aktiven Betrieb ergibt. Hierfür wird vorgeschlagen, das Mobilteil so auszugestalten, daß dieses in die Lage versetzt wird, erfaßte Sonderinformationen, z.B. Feldstärkewerte und/oder Übertragungsfehlerwerte zu analysieren, um auf deren Basis mittels eines Folgeregelkreises die Sendeleistung entsprechend anzupassen. Um die beschriebene Regelung der Sendeleistung durchführen zu können, wird das dort vorgestellte Schnurlos-Mobilteil derart modifiziert, daß einem Microcontroller ein Regelkreis zugeordnet ist, der aus einzelnen im Microcontroller implementierten Programmodulen gebildet wird.

Mit dem Regelkreis werden die in dem Microcontroller zur Verfügung stehenden Feldstärkewerte und Übertragungsfehlerwerte zur Regelung der Sendeleistung des Mobilteils ausgewertet und benutzt. Der Regelkreis ist dort so ausgestaltet, daß der Wert der Regelgröße, d.h. die zu regelnde Sendeleistung den sich ändernden Werten der Führungsgröße, nämlich der Feldstärkewerte und der Übertragungsfehlerwerte folgt. Aus den erfaßten Feldstärkewerten läßt sich die Entfernung zur Basisstation ableiten, während aus den Übertragungsfehlerwerten sich ein Maß für die Qualität der empfangenen Funknachrichten ergibt. Nach einer entsprechenden Auswertung im Microcontroller wird über entsprechende Ports oder Register, z.B. einem Burstmodus-Controller, das Erhöhen oder Absenken der Sendeleistung im Funkteil veranlaßt. Die bekannte Regelung kann dabei sowohl kontinuierlich als auch in einigen wenigen großen Schritten, d.h. diskontinuierlich arbeiten.

Die bekannten mobilteilseitigen Sendeleistungsregelungen zur Erhöhung der Betriebszeiten respektive zur Verminderung des Energieverbrauchs werden dann aktiviert, wenn die betreffenden Mobilteile über vorgegebene Protokollrahmen mit einer Basisstation synchronisiert sind. Es ist jedoch nachteilig, daß zur Durchführung der Regelung selbst eine Vielzahl von Werten zwischen Mobilteil und Basisstation bzw. umgekehrt ausgetauscht werden müssen, was die Kanalbelastung erhöht und die ansonsten zu übertragende Datenrate reduziert.

Bei der Sendeleistungsregelung in Mobilfunksystemen und Indoor-Übertragung ist die Zeitvarianz des Kanals bzw. der Kanäle sehr gering, da davon auszugehen ist, daß sich die jeweilige Mobilstation nur sehr langsam, d.h. mit einer Geschwindigkeit von ≤3 km/h bewegt. Ebenfalls gering ist die zeitliche Dispersion des jeweiligen Kanals. Mit anderen Worten ist der betrachtete Kanal kaum frequenz- aber zeitselektiv. Ein geeignetes resultierendes Kanalmodell unter Beachtung oben genannter Umstände ist dies des Flat-Fading (Rayleigh-Fading-Kanal). Bei einem derartigen Kanalmodell ergeben sich relativ kurzzeitige Empfangssignalleistungsschwankungen, die eine Dynamik von bis zu einigen 10 dB aufweisen können.

Aufgrund der stark schwankenden Empfangssignalleistung sind außerordentlich hohe Werte des Verhältnisses von Empfangssignalleistung zu Rauschleistung nachzuweisen, um eine zufriedenstellende Bitfehlerrate der eigentlichen Datenübertragung zu erzielen. Durch die weiter oben beschriebene Sendeleistungsregelung kann die Variation der Empfangssignalleistung im betrachteten Szenario reduziert werden, wobei es hierfür notwendig ist, beim Empfänger die Empfangssignalleistung zu messen und diese Meßwerte durch eine geeignete Signalisierung an den Sender zu übertragen, so daß die Sendeleistung des Basisteils, wie im Stand der Technik beschrieben, geregelt werden kann. Problematisch ist jedoch die Übertragung der Meßwerte vom Mobilteil zur Basisstation aufgrund der sich unter Umständen schnell und häufig ändernden Meßwerte.

Aus der EP 0 682 417 A2 ist ein Verfahren bekannt, bei dem in einem Mobilteil ein aktuelles signal-/ Interferenzleistungs-Verhältnis ermittelt und mit einem vorbestimmten Wert dieses Verhältnisses verglichen wird, so daß abhängig vom Ergebnis dieses Vergleichs ein Sendeleistungs-Kontrolbit erzeugt und an eine Basisstation übermittelt wird, wobei die Basisstation aufgrund der Anzahl von aufeinanderfolgenden Sendeleistungs-Kontrollbits gleichen Wertes einen neuen aktuellen Sendeleistungswert ermittelt und einstellt.

Es ist daher Aufgabe der Erfindung, ein Verfahren zum insbesondere Indoor-Betreiben einer drahtlosen Telekommunikationseinrichtung anzugeben, welche mindestens eine Basisstation und mindestens ein Mobilteil umfaßt, und wobei die Basisstation mit minimiertem Signalisierungsaufwand in die Lage versetzt ist, eine effektive Regelung der Sendeleistung zur Verbesserung der Üertragungsbedingungen zu realisieren.

Weiterhin ist es Aufgabe der Erfindung, neben einem niedrigen Signalisierungsaufwand gleichzeitig eine Möglichkeit vorzusehen, mit deren Hilfe in einfacher Weise eine Dynamikbegrenzung der Sendeleistungsregelung vorgenommen werden kann.

Die Lösung der Aufgabe der Erfindung erfolgt mit einem Verfahren gemäß Definition nach Patentanspruch 1, wobei die Unteransprüche mindestens zweckmäßige Ausgestaltungen und Weiterbildungen umfassen.

Der Grundgedanke der Erfindung besteht demgemäß darin, pro übertragenem Datenrahmen innerhalb standardisierter Protokolle nur ein einziges Bit zur Darstellung der Empfangsverhältnisse des Mobilteils hin zum Basisteil bzw. zur Basisstation zu übertragen, wobei mit Hilfe einer speziellen Berechnungsweise die Basisstation in der Lage ist, allein aus dieser Information die Sendeleistungsregelung durchzuführen.

Erfindungsgemäß wird für die Berechnung auf eine adaptive Schrittweitenregelung für die Anpassung der Sendeleistung zurückgegriffen und zusätzlich eine Dynamikbegrenzung eingeführt.

Gemäß dem erfindungsgemäßen Verfahren wird zunächst im Empfänger des Mobilteils, vorzugsweise realisiert durch Softwaremodule eines dort vorgesehenen Microcontrollers, das Verhältnis von Empfangs- zu Rauschleistung in vorgegebenen zeitlichen Abständen ermittelt. Die Bestimmung dieses Verhältnisses kann quasi kontinuierlich oder diskontinuierlich erfolgen.

Der jeweils erhaltene Verhältniswert wird dann mit einem vorgegebenen Sollwert verglichen und es wird in Abhängigkeit vom Vergleichsergebnis ein Signalisierungsbit je Datenrahmen vom Mobilteil zur Basisstation übertragen. Dieses Signalisierungsbit, das ein nicht belegtes Bit eines Standardprotokolls sein kann, dient dann in der Basisstation zur Berechnung der aktuellen bzw. aktualisierten Sendeleistung, wobei die Schrittweite adaptiv festlegbar ist.

Auf der Grundlage eines vorherigen Sendeleistungswerts wird der aktuelle Sendeleistungswert ermittelt, indem zum vorherigen Sendeleistungswert ein Produkt aus einem die Schrittweite bestimmenden Korrekturwert und einem aus dem Signalisierungsbit bestimmten Vorgabewert addiert wird.

Wenn das im Empfänger des Mobilteils bestimmte Verhältnis von Empfangs- zur Rauschleistung unter einem Sollwert liegt, wird das Signalisierungsbit zu 0 bestimmt. In dem Falle, wenn das Verhältnis zwischen Empfangs- zu Rauschleistung über dem Sollwert liegend festgestellt wurde, erhält das Signalisierungsbit den Wert 1.

Zusätzlich besteht erfindungsgemäß die Möglichkeit, den die Schrittweite bestimmenden Korrekturwert zur Begrenzung der Dynamik der Sendeleistungsregelung in Abhängigkeit vom Erreichen eines oberen oder unteren Sendeleistungsschwellwerts zu variieren, wodurch Leistungssprünge und Regelprobleme verhindert werden können, so daß insgesamt das Regel- und Einschwingverhalten optimierbar ist.

Erfindungsgemäß bestimmt die Basisstation unter Rückgriff auf einen Microcontroller und geeigneter Programmodule die Sendeleistung S (k) nach folgender Beziehung:

$$S(k) = S(k\text{-}1) + \Delta(k) \cdot \bar{e}(k) \qquad k = 1,2,3,....$$

mit

$$\bar{e}(k) = 2 \cdot e(k) - 1$$

und

$$\Delta(k) = \Delta(k\text{-}1)K^{[\bar{e}(k)\cdot\bar{e}(k\text{-}1)]}$$

Hierbei bedeuten

S(k)   Sendeleistung für Frame No.k( in dB)

$\Delta$(k)   Korrekturwert für die Sendeleistung für Frame No. k (Schrittweite)

K   Korrekturkonstante zur adaptiven Schrittweitenkorrektur

e(k)   Signalisierungsbit vom Empfänger für Frame No.k, e(k)ε{0,1}

$\bar{e}$ (k)   umgerechnetes Signalisierungsbit vom Empfänger für Frame No.k, e(k)ε{-1,1}.

Die Startwerte und Ausgangsparameter für die oben genannte Rechenvorschrift sind hierbei:

$$S(0) = S_0 = 1 \text{ (normiert)}$$

$$\Delta(0) = \Delta_0$$

$$e(0) = 1$$

$$K = K_0 > 1$$

Zusätzlich zur Sendeleistungsregelung mit einem Signalisierungsaufwand von nur einem einzigen Bit besteht die Möglichkeit, eine Dynamikbegrenzung vorzunehmen. Hierfür wird in der Nähe der Ober- und/oder der Untergrenze der Sendeleistung der die Schrittweite bestimmende Korrekturwert $\Delta$(k) in nachstehender Weise variiert:

Wenn S(k)> $S_{th,high}$ dann setze

$$\Delta(k) = \Delta_c \cdot (S(k)\text{-}S_{max})/(S_{th,high} - S_{max})$$

Wenn S(k)< $S_{th,low}$ dann setze

$$\Delta(k) = \Delta_0 \cdot (S(k)\text{-}S_{min}) / (S_{th,low} - S_{min}).$$

Die Schwellwerte $S_{th,low}$ und $S_{th,high}$, ab denen eine Variation der Werte für die Schrittweite $\Delta$(k) erfolgt, und der Startwerte $\Delta_0$ für die Schrittweite werden vorgegeben oder im Sinne von Lernwerten aus früheren Kommunikationsmodi übernommen oder aktualisiert.

Die Erfindung soll nachstehend anhand eines Ausführungsbeispiels sowie unter Zuhilfenahme von Figuren näher erläutert werden.

Hierbei zeigen:

Fig. 1   einen Programmablaufplan mit prinzipieller Darstellung des Verfahrens zur Sendeleistungsregelung einschließlich Berechnungsvorschrift für die Basisstation und

Fig. 2   einen Programmablaufplan zur Variation der die Schrittweite bestimmenden Korrekturwerte $\Delta$(k) zur Dynamikbegrenzung der Sendeleistungsregelung.

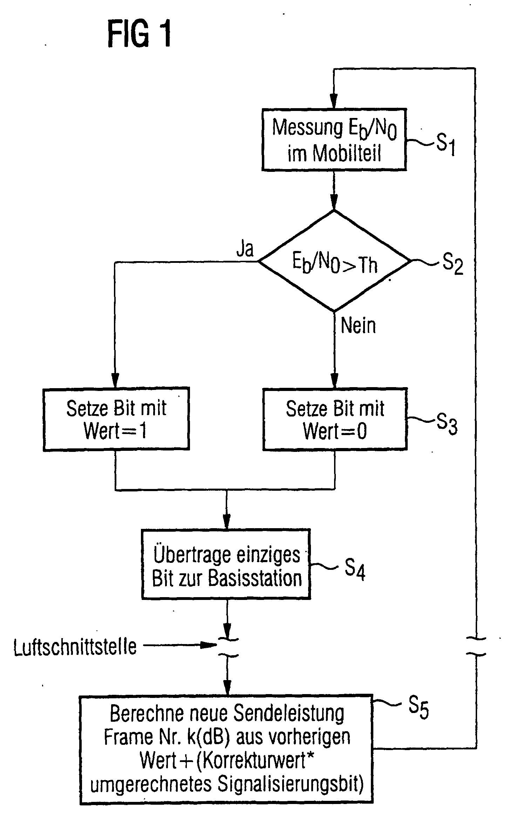

Beim Verfahren zum insbesondere Indoor-Betreiben einer drahtlosen Telekommunikationseinrichtung, welche mindestens eine Basisstation und mindestens ein Mobilteil umfaßt, wird unter Hinweis auf Fig. 1 im Schritt S1 zunächst durch das Mobilteil das Verhältnis von Empfangsleistung $E_b$ zur Rauschleistung $N_0$ bestimmt. Gemäß Schritt S2 wird das Verhältnis mit einem vorgegebenen Sollwert verglichen. Liegt das Verhältnis über dem Sollwert, wird ein Signalisierungsbit gleich 1 gesetzt. In dem Falle, wo das bestimmte Verhältnis unter dem Sollwert liegt, wird ein Signalisierungsbit mit dem Wert 0 gesetzt. Nachdem ein entsprechendes Bit im Schritt S3 gesetzt wurde, wird dieses einzige Bit je zu übertragendem Rahmen über eine standardisierte Luftschnittstelle zur Basisstation gemäß Schritt S4 übertragen.

Die Basisstation bestimmt dann eine neue Sendeleistung gemäß Schritt S5 für den Frame No. k in dB aus dem vorherigen Wert zuzüglich eines Produktes aus dem Korrekturwert bzw. der Schrittweite und dem umgerechneten Signalisierungsbit.

Der Schritt S5, d.h. die Berechnung der neuen Sendeleistung, erfolgt unter Rückgriff auf folgende Beziehungen:

$$S(k) = S(k\text{-}1) + \Delta(k)\cdot\bar{e}(k) \qquad k=1,2,3,....$$

mit

$$\bar{e}(k) = 2\cdot e(k)\text{-}1$$

sowie mit

$$\Delta(k)=\Delta(k\text{-}1)K^{[\bar{e}(k)\cdot\bar{e}(k-1)]}$$

wobei

S(k)  Sendeleistung für Frame No. k( in dB)

$\Delta$(k)  Korrekturwert für die Sendeleistung für Frame No. k (Schrittweite)

K  Korrekturkonstante zur adaptiven Schrittweitenkorrektur

e(k)  Signalisierungsbit vom Empfänger für Frame No. k,e(k)$\varepsilon${0,1}

$\bar{e}$ (k)  umgerechnetes Signalisierungsbit vom Empfängerfür Frame No. k, e(k)$\varepsilon${-1,1}

sind.

Die Startwerte und Parameter für die oben genannte Rechenvorschrift sind dabei

$$S(0) = S_0 = 1 \text{ (normiert)}$$

$$\Delta(0) = \Delta_0$$

$$e(0) = 1$$

$$K = K_0 > 1$$

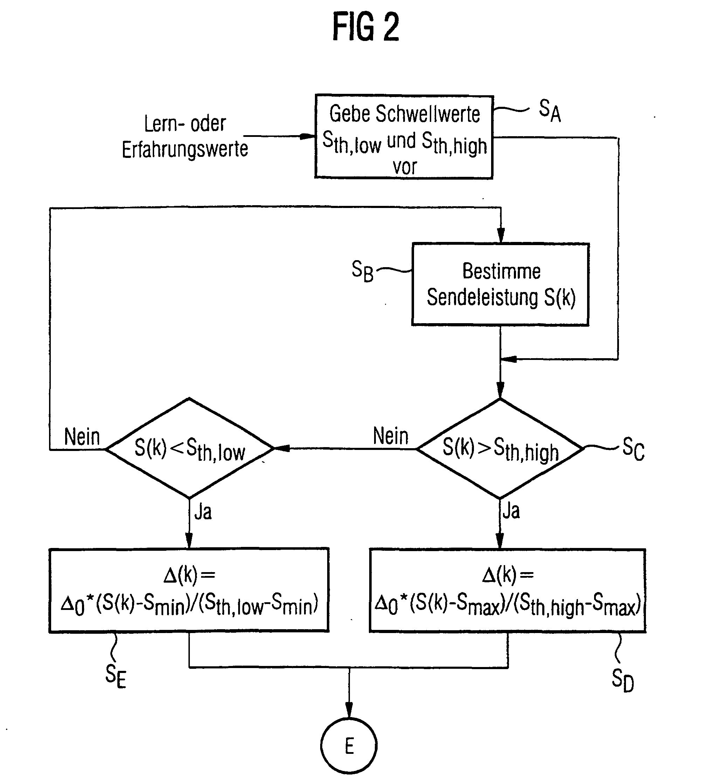

Unter Hinweis auf Fig. 2 soll das Verfahren zur Dynamikbegrenzung der Sendeleistungsregelung in der Nähe einer Obergrenze $S_{max}$ bzw. Untergrenze $S_{min}$ der Sendeleistung S(k), d.h. die Korrektur oder Variation des Wertes von $\Delta$(k) beschrieben werden.

In einem Schritt $S_A$ werden zunächst Schwellwerte $S_{th,low}$ und $S_{th,high}$ vorgegeben, ab denen eine Korrektur der Werte für die Schrittweite $\Delta$(k) erfolgen soll. Diese Werte befinden sich innerhalb des von der Obergrenze $S_{max}$ bzw. der Untergrenze $S_{min}$ umfaßten Bereichs der Sendeleistung S(k).

Die Schwellwerte $S_{th,low}$ und $S_{th,high}$ können auch als Lern- oder Erfahrungswerte aus früheren Messungen gewonnen und bereitgestellt werden. Nach der Bestimmung der aktuellen oder momentanen Sendeleistung S(k) im Schritt $S_B$ wird dann im Schritt $S_c$ geprüft, ob die momentane Sendeleistung den oberen Schwellwert $S_{th,high}$ überschreitet oder kleiner als der untere Schwellwert $S_{th,low}$ ist.

In dem Falle, wenn die aktuelle Sendeleistung S(k) größer als der Schwellwert $S_{th,high}$ ist, erfolgt eine Korrektur der Schrittweite $\Delta$(k) nach folgender Beziehung (Schritt $S_D$) :

$$\Delta(k) = \Delta_0 \cdot (S(k)\text{-}S_{max}) / (S_{th,high} - S_{max}).$$

Im Falle eines Sendeleistungswerts S(k) kleiner als der Schwellwert $S_{th,low}$ bestimmt sich $\Delta$(k) wie folgt (Schritt $S_E$) :

$$\Delta(k) = \Delta_0 \cdot (S(k)\text{-}S_{min})/(S_{th,low} - S_{min}).$$

Mit dem vorstehend beschrieben Ausführungsbeispiel gelingt es in einfacher Weise, eine adaptive Schrittweitenregelung für die Anpassung der Sendeleistung einer Basisstation in einem Telekommunikationssystem anzugeben, wobei für die Übertragung der die Empfangsverhältnisse repräsentierenden Information ausgehend vom Mobilteil nur ein Bit Signalisierungsaufwand erforderlich ist. Gleichzeitig kann eine Schrittweitenvariation der Regelung respektive eine Dynamikbegrenzung in der Basisstation realisiert werden.

**Patentansprüche**

1. Verfahren zum insbesondere Indoor-Betreiben einer drahtlosen Telekommunikationseinrichtung, welche mindestens eine Basisstation und mindestens ein Mobilteil umfaßt, wobei im Empfänger des Mobilteils die momentane Empfangsleistung gemessen, der Empfangsleistungswert der Basisstation zur Regelung der Sendeleistung übermittelt und im Empfänger des Mobilteils das Verhältnis von Empfangs- zu Rauschleistung ($E_b/N_0$) in vorgegebenen zeitlichen Abständen ermittelt wird und wobei der jeweils erhaltene Verhältniswert mit einem Sollwert verglichen wird und in Abhängigkeit vom Ergebnis ein Signalisierungsbit (e(k)) je Datenrahmen (k) vom Mobilteil zur Basisstation übertragen wird,
   **dadurch gekennzeichnet,**
   **daß** in der Basisstation eine Berechnung der aktuellen Sendeleistung (S(k)) mit adaptiver Schrittweitenregelung auf der Grundlage des vorherigen Sendeleistungswerts (S(k-1)) zuzüglich eines Produkts aus einem die Schrittweite bestimmenden Korrekturwert ($\Delta$(k)) und einem aus dem Signalisierungsbit (e(k)) bestimmten Vorgabewert ($\bar{e}$(k)) nach folgender Beziehung erfolgt:

$$S(k) = S(k\text{-}1)+\Delta(k)\cdot\bar{e}(k) \qquad k=1,2,3,....$$

mit

$$\bar{e}(k)=2\cdot e(k)\text{-}1$$

und

$$\Delta(k)= \Delta(k\text{-}1)K^{[\bar{e}(k)\cdot\bar{e}(k-1)]},$$

wobei

| | |
|---|---|
| $S(k)$ | Sendeleistung für Frame No. k ( in dB) |
| $\Delta(k)$ | Korrekturwert für die Sendeleistung für Frame No.k (Schrittweite) |
| $K$ | Korrekturkonstante zur adaptiven Schrittweitenkorrektur |
| $e(k)$ | Signalisierungsbit vom Empfänger für Frame No.k, $e(k)\varepsilon\{0,1\}$ |
| $\bar{e}(k)$ | umgerechnetes Signalisierungsbit vom Empfänger für Frame No.k, $\bar{e}(k)\varepsilon\{-1,1\}$ |

ist.

2. Verfahren nach Anspruch 1,
**dadurch gekennzeichnet,**
**daß** das Signalisierungsbit ($e(k)$) 0 ist, wenn das Verhältnis Empfangs- zu Rauschleistung ($E_b/N_0$) unter dem Sollwert liegt und dem Wert 1 entspricht, wenn das Verhältnis Empfangs- zu Rauschleistung ($E_b/N_0$) über dem Sollwert liegt.

3. Verfahren nach Anspruch 1 oder 2,
**dadurch gekennzeichnet,**
**daß** der die Schrittweite bestimmende Korrekturwert ($\Delta(k)$) zur Begrenzung der Dynamik der Sendeleistung in Abhängigkeit vom Erreichen eines oberen oder unteren Sendeleistungsschwellwerts ($S_{th,low}$; $S_{th,high}$) variiert wird.

4. Verfahren nach einem der vorhergehenden Ansprüche,
**gekennzeichnet durch**
folgende Ausgangs- oder Startparameter:

$$S(0) = S_0 = 1 \text{ (normiert)}$$

$$\Delta(0) = \Delta_0$$

$$e(0) = 1$$

$$K = K_0 > 1.$$

5. Verfahren nach einem der Ansprüche 3 oder 4,
**dadurch gekennzeichnet,**
**daß** zur Begrenzung der Dynamik der Sendeleistungsregelung in der Nähe der Obergrenze und/oder Untergrenze ($S_{max}$ ; $S_{min}$) der Sendeleistung ($S(k)$) der die Schrittweite bestimmende Korrekturwert ($\Delta(k)$) wie folgt variiert wird:

bei $S(k) > S_{th,high}$

$$\Delta(k) = \Delta_0 \cdot (S(k)-S_{max})/(S_{th,high} - S_{max})$$

bei $S(k) < S_{th,low}$

$$\Delta(k) = \Delta_0 \cdot (S(k)-S_{min})/(S_{th,low} - S_{min}),$$

wobei der obere und der untere Sendeleistungsschwellwert ($S_{th,high}$) und ($S_{th,low}$) sowie der Startwert $\Delta_0$ für die Schrittweite vorgebbar oder aus Erfahrungswerten beim Betreiben der drahtlosen Telekommunikationseinrichtung gewonnen werden und im Sinne von Lernwerten aktualisierbar sind.

**Claims**

1. Method in particular for indoor operation of a wire-free telecommunications device, which has at least one base station and at least one mobile part, with the instantaneous received power being measured in the receiver in the mobile part, the received power level being transmitted to the base station in order to control the transmitted power, and the ratio of the received power to the noise level ($E_b/N_0$) being determined at predetermined time intervals in the receiver in the mobile part, and with the respectively obtained ratio being compared with a nominal value, and one signalling bit ($e(k)$) being transmitted for each data frame (k) from the mobile part to the base station as a function of the result,
**characterized**
**in that**, in the base station, a calculation of the present transmitted power ($S(k)$) is carried out with adaptive step-width control on the basis of the previous transmitted power level ($S(k-1)$) plus a product of a correction value ($\Delta(k)$) which governs the step width and a preset value ($\bar{e}(k)$) which is determined from the signalling bit ($e(k)$), using the following relationship:

$$S(k) = S(k-1) + \Delta(k) \cdot \bar{e}(k) \qquad k = 1,2,3,...$$

where

$$\bar{e}(k) = 2 \cdot e(k)-1$$

and

$$\Delta(k) = \Delta(k-1)K^{[\bar{e}(k) \cdot \bar{e}(k-1)]}$$

where

| | |
|---|---|
| S(k) | is the transmitted power for frame No. k (in dB) |
| $\Delta$(k) | is a correction value for the transmitted power for frame No. k (step width) |
| K | is a correction constant for adaptive step-width correction |
| e(k) | is a signalling bit from the receiver for frame No. k, $e(k)\varepsilon\{0.1\}$ |
| $\bar{e}$ (k) | is a converted signalling bit from the receiver for frame No. k, $\bar{e}(k)\varepsilon\{-1,1\}$. |

2. Method according to Claim 1,
**characterized**
**in that** the signalling bit (e(k)) is 0 when the ratio of the received power to the noise level ($E_b/N_0$) is below the nominal value, and corresponds to the value 1 when the ratio of the received power to the noise level ($E_b/N_0$) is greater than the nominal value.

3. Method according to Claim 1 or 2,
**characterized**
**in that** the correction value ($\Delta$(k)) which governs the step width is varied in order to limit the dynamic range of the transmitted power as a function of whether an upper or lower transmitted power threshold value ($S_{th,low}$; $S_{th,high}$) is reached.

4. Method according to one of the preceding claims,
**characterized by**
the following initial or starting parameters:

$$S(0) = S_0 = 1 \text{ (normalized)}$$

$$\Delta(0) = \Delta_0$$

$$e(0) = 1$$

$$K = K_0 > 1.$$

5. Method according to one of Claims 3 or 4,
**characterized**
**in that**, in order to limit the dynamic range of the transmitted power control in the vicinity of the upper limit and/or the lower limit ($S_{max}$; $S_{min}$) of the transmitted power (S(k)), the correction value ($\Delta$(k)) which governs the step width is varied as follows:

if $S(k) > S_{th,high}$

$$\Delta(k) = \Delta_0 \cdot (S(k)\text{-}S_{max})/(S_{th,high} - S_{max})$$

if $S(k) < S_{th,low}$

$$\Delta(k) = \Delta_0 \cdot (S(k)\text{-}S_{min})/(S_{th,low} - S_{min}),$$

in which case the upper and the lower transmitted power threshold value ($S_{th,high}$) and ($S_{th,low}$) and the starting value $\Delta_0$ for the step width can be predetermined or are obtained from empirical values during operation of the wire-free telecommunications device, and can be updated in the sense of learnt values.

## Revendications

1. Procédé destiné, en particulier, à exploiter à l'intérieur d'un bâtiment un dispositif de télécommunication sans fil, qui comporte, au moins, une station de base et, au moins, un poste mobile, la puissance de réception momentanée étant mesurée dans le récepteur du poste mobile, la valeur de la puissance de réception de la station de base étant transmise pour la régulation de la puissance d'émission et le rapport entre la puissance de réception et la puissance de bruit (Eb/N0) étant déterminé, dans le récepteur du poste mobile, à des intervalles de temps prédéterminés et la valeur du rapport obtenue dans chaque cas étant comparée à une valeur de consigne et, en fonction du résultat, un bit de signalisation (e (k)) étant transmis dans chaque cadre de données (k) du poste mobile vers la station de base **caractérisé par le fait**
**que**, dans la station de base, on procède, conformément à la relation suivante, à un calcul de la puissance actuelle d'émission (S (k)), avec une régulation adaptative du pas de progression, sur la base de la valeur précédente de la puissance d'émission (S (k - 1)) augmentée d'un produit formé à partir d'une valeur de correction ($\Delta$ (k)), qui détermine le pas de progression, et d'une valeur allouée ($\bar{e}$(k)), déterminée à partir du bit de signalisation (e (k)):

$$S(k) = S(k - 1) + \Delta(k) \cdot \bar{e}(k) \qquad k = 1, 2, 3, ...$$

avec

$$\bar{e}(k) = 2 \cdot e(k) - 1$$

et

$$\Delta(k) = \Delta(k - 1) K^{[\bar{e}(k)\cdot\bar{e}(k\text{-}1)]}$$

dans laquelle les symboles représentent

| | |
|---|---|
| S(k) | la puissance d'émission pour le cadre n° k (en dB), |
| $\Delta$(k) | la valeur de correction pour la puissance d'émission pour le cadre n° k (pas de progression), |
| K | la constante de correction pour la correction adaptative du pas de progression, |
| e(k) | le bit de signalisation du récepteur pour le cadre n° k, $e(k)\varepsilon\{0, 1\}$ |
| $\bar{e}$(k) | le bit recalculé de signalisation du récepteur pour le cadre n° k, $\bar{e}(k)\varepsilon\{-1, 1\}$. |

2. Procédé selon la revendication 1 **caractérisé par le fait que** le bit de signalisation (e (k)) est égal à 0, lorsque le rapport entre la puissance de réception et la puissance de bruit ($E_b / N_0$) est inférieur à la valeur de consigne et correspond à la valeur 1, lorsque le rapport entre la puissance de réception et la puissance de bruit ($E_b / N_0$) est supérieur à la valeur de consigne.

3. Procédé selon la revendication 1 ou 2 **caractérisé par le fait que** la valeur de correction ($\Delta$(k)), qui détermine le pas de progression, destinée à la limitation de la dynamique de la puissance d'émission varie selon que la puissance d'émission atteint une valeur de seuil supérieure ou inférieure ($S_{th,low}$; $S_{th,high}$).

4. Procédé selon l'une des revendications précédentes **caractérisé par** les paramètres de départ et d'origine suivants:

$$S (0) = S_0 = 1 \text{ (normalisé)}$$

$$\Delta (0) = \Delta_0$$

$$e (0) = 1$$

$$K = K_0 > 1.$$

5. Procédé selon l'une des revendications 3 ou 4 **caractérisé par le fait que**, pour la limitation de la dynamique de la régulation de la puissance d'émission à proximité de la limite supérieure et/ou de la limite inférieure ($S_{max}$;

$S_{min}$) de la puissance d'émission (S (k)), on fait varier la valeur de correction ($\Delta$ (k)), qui détermine le pas de progression, de la façon suivante:

dans le cas où S (k) > $S_{th, high}$,

$$\Delta (k)=\Delta_0 \cdot (S(k)-S_{max})/(S_{th,high}-S_{max}),$$

dans le cas où S (k) < $S_{th,low}$,

$$\Delta (k) = \Delta_0 \cdot (S (k) - S_{min}) / (S_{th,low} - S_{min}),$$

la valeur de seuil supérieure et la valeur de seuil inférieure ($S_{th, high}$) et ($S_{th, low}$) de la puissance d'émission, ainsi que la valeur de départ $\Delta_0$ du pas de progression pouvant être prédéterminées ou obtenues à partir de valeurs empiriques lors de l'exploitation du dispositif de télécommunication sans fil et actualisées dans le sens de valeurs d'entraînement.

# FIG 1

```
                    ┌──────────────────────┐
                    │  Messung $E_b/N_0$    │ ─── S1
                    │    im Mobilteil       │
                    └──────────────────────┘
                               │
                               ▼
            Ja          ◆ $E_b/N_0 > Th$ ◆ ─── S2
        ┌───────────────
        │                      │ Nein
        ▼                      ▼
┌──────────────┐      ┌──────────────┐
│ Setze Bit mit│      │ Setze Bit mit│ ─── S3
│   Wert=1     │      │   Wert=0     │
└──────────────┘      └──────────────┘
        │                      │
        └──────────┬───────────┘
                   ▼
         ┌──────────────────┐
         │ Übertrage einziges│ ─── S4
         │ Bit zur Basisstation│
         └──────────────────┘
                   │
   Luftschnittstelle ──────▶
                   │
                   ▼
  ┌────────────────────────────────────┐
  │ Berechne neue Sendeleistung        │ ─── S5
  │ Frame Nr. k(dB) aus vorherigen     │
  │ Wert + (Korrekturwert*             │
  │ umgerechnetes Signalisierungsbit)  │
  └────────────────────────────────────┘
```

# FIG 2

Lern- oder Erfahrungswerte $\longrightarrow$

Gebe Schwellwerte $S_{th,low}$ und $S_{th,high}$ vor — $S_A$

$S_B$ — Bestimme Sendeleistung $S(k)$

Nein — $S(k) < S_{th,low}$ — Nein — $S(k) > S_{th,high}$ — $S_C$

Ja — Ja

$$\Delta(k) = \Delta_0 * (S(k) - S_{min})/(S_{th,low} - S_{min})$$

$$\Delta(k) = \Delta_0 * (S(k) - S_{max})/(S_{th,high} - S_{max})$$

$S_E$

$S_D$

E